**Europäisches Patentamt**

**European Patent Office**

**Office européen des brevets**

(11) Veröffentlichungsnummer : **0 310 811 B1**

(12) # EUROPÄISCHE PATENTSCHRIFT

(45) Veröffentlichungstag der Patentschrift :
**20.03.91 Patentblatt 91/12**

(51) Int. Cl.$^5$ : **B23B 3/30**

(21) Anmeldenummer : **88114133.7**

(22) Anmeldetag : **30.08.88**

(54) Zweispindeldrehmaschine.

(30) Priorität : **07.10.87 DE 3733936**

(43) Veröffentlichungstag der Anmeldung :
**12.04.89 Patentblatt 89/15**

(45) Bekanntmachung des Hinweises auf die
Patenterteilung :
**20.03.91 Patentblatt 91/12**

(84) Benannte Vertragsstaaten :
**AT CH DE ES FR GB IT LI SE**

(56) Entgegenhaltungen :
**DE-A- 2 951 565**
**DE-A- 3 035 451**
**DE-A- 3 514 069**
**DE-A- 3 530 982**
**DE-B- 1 161 744**
**GB-A- 2 041 262**
**GB-A- 2 141 647**

(73) Patentinhaber : **Weiler Werkzeugmaschinen
GmbH & Co. KG
Würzburger Strasse 17
W-8522 Herzogenaurach (DE)**

(72) Erfinder : **Werner, Siegfried
Sonnenstrasse 9
W-8802 Sachsen (DE)**
Erfinder : **Guenther, Dietrich, Dr.
Astastrasse 61
W-4800 Bielefeld 13 (DE)**

(74) Vertreter : **Popp, Eugen, Dr. et al
MEISSNER, BOLTE & PARTNER
Widenmayerstrasse 48 Postfach 86 06 24
W-8000 München 86 (DE)**

Jouve, 18, rue Saint-Denis, 75001 PARIS

## Beschreibung

Die Erfindung betrifft eine Drehmaschine mit zwei unverschieblichen Werkstückspindeln gemäß dem Oberbegriff des Patentanspruches 1.

Eine derartige Drehmaschine ist aus der DE-A-35 30 982 bekannt. Mit dieser Drehmaschine, die vorzugsweise numerisch gesteuert ist, ist neben der bekannten, parallelen Bearbeitung zweier gleicher Werkstücke die auf modernen, einspindligen Drehmaschinen mögliche kollisionsfreie Vier-Achsen-Drehbearbeitung, eine rückseitige Bearbeitung eines einseitig vorbearbeiteten Werkstücks und eine Komplettbearbeitung mittels angetriebener Werkzeuge möglich. Eine gesonderte Kollisionsüberwachung der Werkzeugwege ist nicht erforderlich. Insofern stellt sich die bekannte Drehmaschine durchaus als vorteilhafte Weiterentwicklung des Standes der Technik z.B. nach der DE-A-30 35 451 dar. Nachteilig ist jedoch, daß für eine rückseitige Bearbeitung eines einseitig vorbearbeiteten Werkstücks eine gesonderte Werkstückabgreifeinrichtung sowie Werkstückwendeeinrichtung erforderlich sind. Das einseitig bearbeitete Werkstück wird durch eine am zugeordneten Trommelwerkzeugspeicher angeordnete Werkstückabgreifeinrichtung abgeholt und gegenüber der Werkstückspindel positioniert. In den Zwischenraum zwischen Werkstückspannfutter und Trommelwerkzeugspeicher wird dann eine Werkstückwendeeinrichtung eingeschwenkt, die mit ihrem Werkstückgreifer das Werkstück aus der Werkstückabgreifeinrichtung nimmt und um 180° um eine Spindelachse schwenkt. Dadurch steht das Werkstück dem Werkstückspannfutter gewendet gegenüber. Das Einführen des Werkstücks in das Spannfutter kann durch einen Linearantrieb der Werkstückwendeeinrichtung erfolgen oder von einer Bewegung des den zugeordneten Trommelwerkzeugspeicher tragenden Bettschlittens abgeleitet sein. Anschließend erfolgt die rückseitige Bearbeitung des im Spannfutter fixierten Werkstücks.

Dieses relativ komplizierte System ist vor allem deshalb erforderlich, weil der bekannten Drehmaschine die Werkstückspannstellen in Spindelachsrichtung gleichgerichtet sind.

Aus der bereits erwähnten DE-A-30 35 451 ist es zwar an sich bereits bekannt, bei einer Zweispindel-Drehmaschine die Werkstückspindeln einander gegenüberliegend anzuordnen, und zwar koaxial zueinander. Bei dieser Anordnung besteht jedoch erhöhte Kollisionsgefahr zwischen den beiden Werkzeugträgern. Darüber hinaus ist auch die gleichzeitige Bearbeitung von Innenbohrungen von zwei in den beiden Werkstückspindeln gespannten Werkstücken beschränkt. Die die Trommelwerkzeugspeicher tragenden Querschlitten müssen so weit aufeinanderzufahren, daß die in den Trommelwerkzeugspeichern gespannten Innendrehwerkzeuge mit den beiden koaxial zueinander umlaufenden Werkstücken in Eingriff gebracht werden können, was bedeutet, daß der axiale Abstand der beiden Werkstückspindeln entsprechend groß sein muß. Trotzdem besteht die Gefahr, daß, wenn nicht besondere Vorkehrungen getroffen werden, die beiden Trommelwerkzeugspeicher im Verlaufe der Längsvorschubbewegung, beispielsweise beim Ausfahren der Werkzeuge aus den fertig bearbeiteten Bohrungen der beiden Werkstücke, miteinander kollidieren.

In Erkenntnis dieses Nachteils ist in der DE-A-35 14 069 vorgeschlagen, eine der Werkstückspindeln bezüglich der anderen Werkstückspindel seitlich verstellbar zu machen und die zugeordneten Werkzeugträger den Werkstückspindeln jeweils gegenüberliegend anzuordnen und ebenso wie die seitlich vestellbare Werkstückspindel auf Kreuzschlitten verfahrbar zu lagern. Diese Ausführungsform ist hinsichtlich der Bearbeitungsmöglichkeiten bzw. -variabilität sowie hinsichtlich der Reduzierung von Totwegen und Nebenzeiten den Zweispindel-Drehmaschinen nach der DE-A-35 30 982 oder DE-A-30 35 451 überlegen. Sie besitzt jedoch den Nachteil einer erhöhten Anzahl von NC-Achsen, einer relativ großen Baumasse bedingt durch die der verstellbaren Werkstückspindel sowie den verstellbaren Werkzeugträgern zugeordneten Vorschubeinrichtungen sowie den Nachteil einer erhöhten Gefahr von Kollisionen zwischen den bewegten Aggregaten.

Der vorliegenden Erfindung liegt nun die Aufgabe zugrunde, eine Drehmaschine, insbesondere numerisch gesteuerte Drehmaschine der eingangs genannten Art zu schaffen, die sich durch eine minimale Anzahl von NC-Achsen, geringe Baumasse, stabile Bauweise mit relativ geringem Aufwand sowie reduzierte Kollisionsgefahr und höhere Genauigkeit unter Beibehaltung der Vorteile der bekannten Drehmaschinen, insbesondere der Drehmaschine nach der DE-A-35 14 069, auszeichnet.

Diese Aufgabe wird in überraschend einfacher Weise durch die kennzeichnenden Merkmale des Patentanspruches 1 gelöst.

Erfindungsgemäß sind also die beiden Werkstückspindeln ortsfest angeordnet, und zwar einander gegenüberliegend derart, daß die Spindelachsen parallel zueinander verlaufen und die Werkstückspannstellen dementsprechend seitlich versetzt angeordnet sind. Die Werkzeugträger sind auf gegenüberliegenden Seiten der Spindelachsen der Werkstückspindeln angeordnet, und zwar jeweils auf Kreuzschlitten verfahrbar, wobei mindestens ein Werkzeugträger eine Werkstück-Transfereinrichtung aufweist, so daß auch eine rückseitige Bearbeitung eines einseitig vorbearbeiteten Werkstücks möglich ist. Aufgrund der erwähnten Anordnung der Werkstückspindeln ist eine gesonderte Werkstückwendeeinrichtung nicht erforderlich. Die versetzte Anordnung der beiden Werkstückspindeln erlaubt darüber hinaus eine kollisionsfreie Bearbeitung auch dann, wenn zwei in den beiden Werkstückspindeln gespannte Werkstücke gleichzeitig bearbeitet werden sollen, und zwar ohne daß es erforderlich ist, die zweite Werkstückspindel auf einem Kreuzschlitten verfahrbar anzuordnen.

Aufgrund der erfindungsgemäßen Ausbildung ist es auch möglich, die beiden Werkstückspindeln baugleich auszuführen, wodurch der Gesamtaufwand erheblich reduziert wird. Durch die unverschiebliche bzw. ortsfeste Anordnung der Werkstückspindeln wird insgesamt eine geringere Baumasse erhalten, insbesondere bedingt durch den Wegfall von Vorschubeinrichtungen sowie Kreuzschlitten für die Werkstückspindeln. Gleichzeitig wird dadurch eine stabilere Bauweise ermöglicht, und zwar aufgrund der festen Anbindung der Werkstückspindeln ans Maschinenbett. Schließlich entfallen zusätzliche Toleranzen durch die feste Anbindung der beiden Werkstückspindeln, wodurch sich eine höhere Bearbeitungsgenauigkeit erzielen läßt.

Die ortsfeste bzw. unverschiebliche Anordnung der Werkstückspindeln hat bei der erfindungsgemäßen Ausbildung der Drehmaschine keine beschränkte Arbeitszeit zur Folge, da die Werkstück-Transferzeit im Vergleich zum Stand der Technik, z.B. nach der DE-A-35 14 069, unverändert bleibt.

Vorteilhafte konstruktive Details der erfindungsgemäßen Drehmaschine sind in den Unteransprüchen beschrieben, wobei die am Trommelwerkzeugspeicher angeordnete Werkstück-Transfereinrichtung auch unabhängig vom erfindungsgemäßen Grundkonzept, d.h. für herkömmliche Drehmaschinen, mit Vorteil verwendet werden kann. Ähnlich verhält es sich mit der der Werkstück-Transfereinrichtung zugeordneten Werkstück-Ausstoßvorrichtung nach den Ansprüchen 16 ff.

Nachstehend wird eine bevorzugte Ausführungsform einer erfindungsgemäß ausgebildeten, numerisch gesteuerten Drehmaschine anhand der beigefügten Zeichnung näher erläutert.

Es zeigen

Fig. 1 eine erfindungsgemäß ausgebildete CNC-Drehmaschine für Zwei-Seiten-Bearbeitung in schematischer Vorderansicht ;

Fig. 2 ein Detail der Maschine nach Fig. 1 in Draufsicht und vergrößertem Maßstab ;

Fig. 3 das Detail "X" in Fig. 2 im Schnitt und noch weiter vergrößertem Maßstab ; und

Fig. 4 die erfindungsgemäß vorgesehene Werkstück-Transfereinrichtung in Vorderansicht und vergrößertem Maßstab.

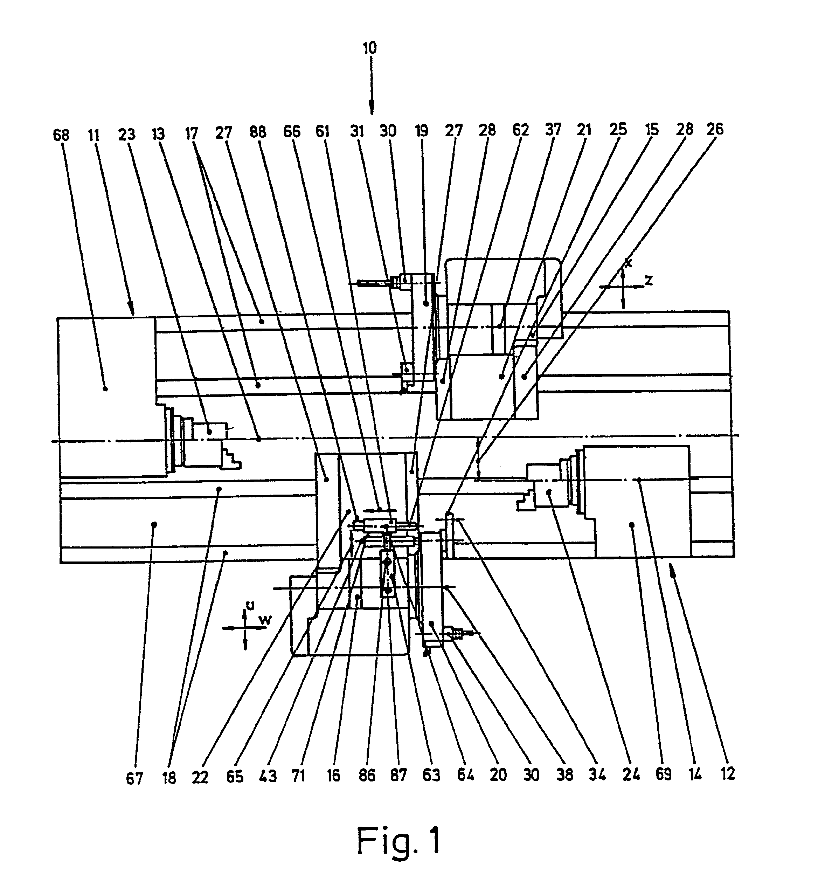

Fig. 1 zeigt eine Drehmaschine mit zwei unverschieblichen Werkstückspindeln 11, 12, deren Spindelachsen 13, 14 parallel zueinander verlaufen und deren Werkstückspannstellen bzw. -spannfutter 23, 24 dementsprechend seitlich versetzt (Versetzung 26) angeordnet sind, wobei die Versetzung 26 z.B.

etwa 100 mm betragen kann. Den beiden Werkstückspindeln sind jeweils eine Werkzeugspindel zugeordnet, die gekennzeichnet sind durch zwei unabhängig verfahrbare Querschlitten 15, 16 mit jeweils einem Trommelwerkzeugspeicher bzw. Revolver 19, 20, wobei jeder Querschlitten 15, 16 auf einem separaten Bettschlitten 21, 22 angeordnet ist. Die Bettschlitten 21, 22 sind auf eigenen, sich in Spindelachsrichtung erstreckenden Führungsbahnen 17, 18 hin- und herverschiebbar, und zwar mittels jeweils gesondert zugeordneter Antriebe. Bei dem dargestellten Ausführungsbeispiel sind die Querschlitten 15, 16 jeweils so weit quer zu den Spindellängsachsen 13, 14 verfahrbar, daß ihre Trommelwerkzeugspeicher 19, 20 jeweils an beiden Werkstückspindeln 11, 12 einsetzbar sind. Die Drehmaschine ist in Fig. 1 mit der Bezugsziffer 10 gekennzeichnet. Die Führungsbahnen 17, 18 sind in einer gemeinsamen Ebene an der sich etwa vertikal erstreckenden Vorderwand des Maschinenbetts 67 angeordnet. Wie bereits oben ausgeführt, tragen die obere und untere Führungsbahn je einen Bettschlitten 21, 22, der über in Fig. 1 nicht dargestellte Gewindespindeln angetrieben wird. Auf den Bettschlitten 21, 22 sind Führungsbahnen 28, 27 für die Querschlitten 15, 16 vorgesehen, die von nicht dargestellten Vorschubmotoren angetrieben werden. Auf jedem Querschlitten 15, 16 ist ein Trommelwerkzeugspeicher 19, 20 so befestigt, daß ihre Schaltachsen 37, 38 parallel zu den beiden Spindelachsen 13, 14 der Stückspindeln 11, 12 verlaufen. Die Trommelwerkzeugspeicher 19, 20 sind im vorliegenden Fall gebildet durch Revolverscheiben mit axialen Aufnahmebohrungen für Werkzeuge bzw. Werkzeughalter 30, 31. Die Werkstückspindeln 11, 12 sind jeweils in einem Spindelkasten 68, 69 drehbar gelagert, wobei die Spindelkästen 68, 69 integrale Bestandteile des Maschinenbetts 67 sein können.

Die die Trommelwerkzeugspeicher 19, 20 tragenden Querschlitten 15, 16 sind auf gegenüberliegenden Seiten der Spindelachsen 13, 14 angeordnet. Die Werkstückspindeln 11, 12 bzw. deren Werkstückspannstellen 23, 24 sind im axialen Abstand voneinander einander zugewandt. Die obere und untere Führungsbahn 17, 18 für die Bettschlitten 21, 22 erstreckt sich jeweils über den gesamten Bereich zwischen den beiden Werkstückspindeln 11, 12, so daß die beiden Trommelwerkzeugspeicher 19, 20 bzw. die daran befestigten Innen- und Außenbearbeitungswerkzeuge beiden Werkstückspindeln bzw. dort eingespannten Werkstücken zustellbar sind. Zur rückseitigen Bearbeitung eines einseitig vorbearbeiteten Werkstücks ist zumindest ein an beiden Werkstückspindeln 11, 12 einsetzbarer Trommelwerkzeugspeicher, hier Trommelwerkzeugspeicher 20, mit einer Werkstück-Transfereinrichtung 25 versehen. Mittels dieser Transfereinrichtung kann ein z.B. an der Werkstückspindel 11 vorbearbeitetes Werkstück abgeholt und der seitlich versetzt gegenüberliegend angeordneten Werkstückspindel 12 zugeführt werden. Nach Übernahme des Werkstücks durch die Werkstückspindel 12 bzw. deren Werkstückspannstelle bzw. -spannfutter 24 kann die rückseitige Bearbeitung des Werkstücks erfolgen. Vorzugsweise haben die Spindelachsen 13, 14 der Werkstückspindeln 11, 12 gleichen senkrechten Abstand von der den beiden Führungsbahnen 17, 18 gemeinsamen Ebene.

Ferner ist vorzugsweise mindestens eine der beiden Werkstückspindeln, z.B. die Werkstückspindel 12, oder einer der beiden Querschlitten, z.B. Querschlitten 16 in die Y-Richtung, d.h. senkrecht zu der den Führungsbahnen 17, 18 gemeinsamen Ebene hin- und herverfahrbar. Auf diese Weise ist eine zusätzliche Bearbeitungsvariation gegeben.

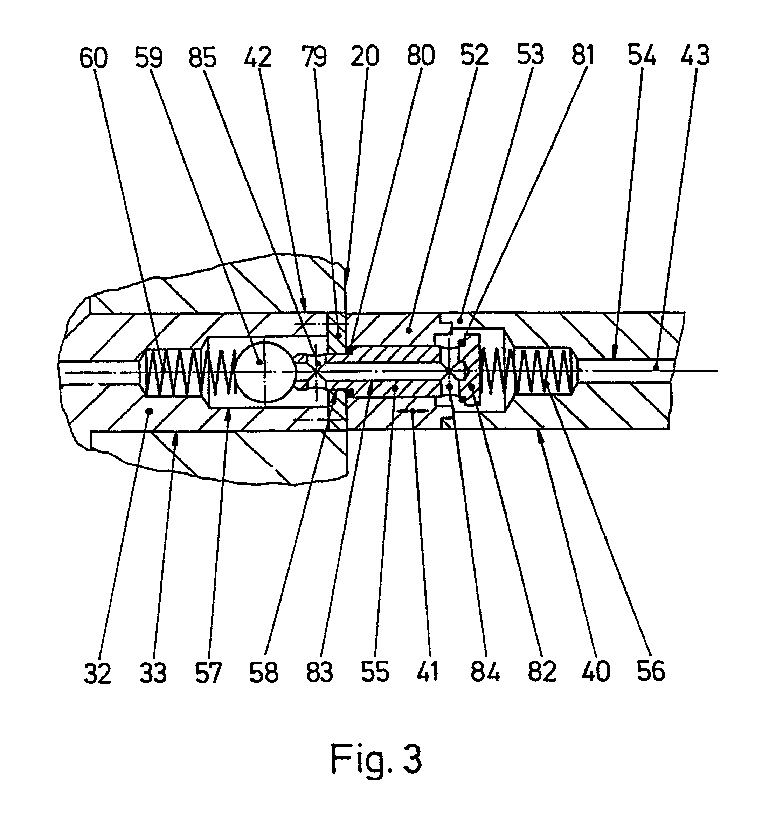

Vorzugsweise sind die Trommelwerkzeugspeicher 19, 20 bzw. die jeweils zugeordneten Revolverscheiben so ausgebildet, daß sie an beiden Seiten Zapfenlöcher zur Befestigung von Werkzeughaltern 30, 31 aufweisen. Damit sind die Trommelwerkzeugspeicher für beide Werkstückspindeln einsetzbar. Vorzugsweise sind die erwähnten Zapfenlöcher als durchgehende Zapfenlöcher 33 ausgebildet (siehe Fig. 3).

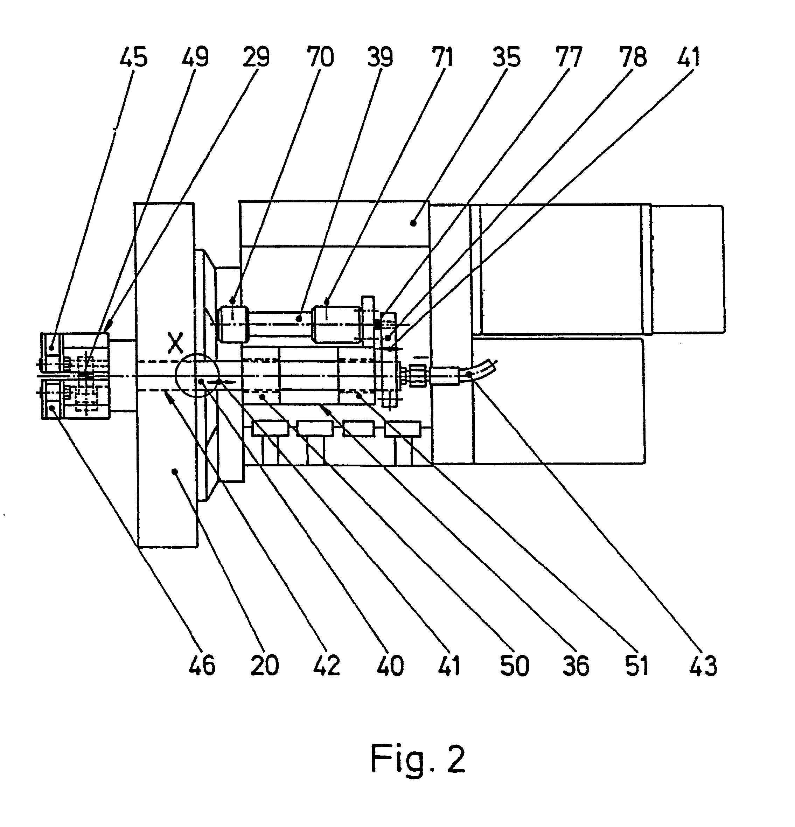

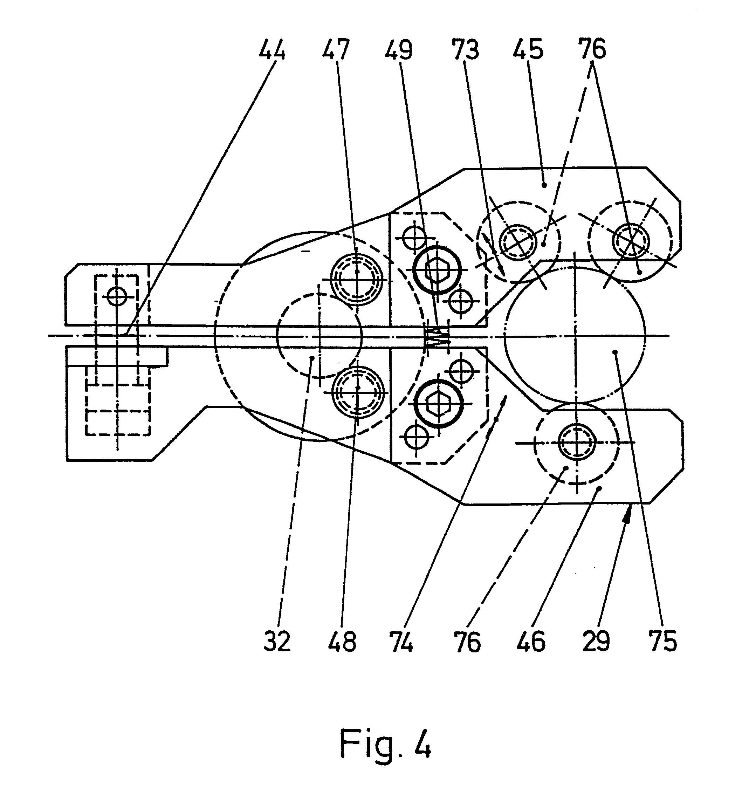

Die oben erwähnte Werkstück-Transfereinrichtung 25 umfaßt bei der dargestellten Ausführungsform ein hydraulisch betätigbares Werkstück-Greiforgan in Form einer Greifzange 29, die ähnlich wie die Werkzeughalter 30, 31 mittels eines Befestigungszapfens 32 in ein durchgehendes Zapfenloch 33 im zugeordneten Trommelwerkzeugspeicher 20 einsteck- und befestigbar ist (siehe Fig. 3). Das als Greifzange ausgebildete Greiforgan 29 ist durch entsprechende Drehung bzw. Schaltung des Trommelwerkzeugspeichers 20 in eine Stellung bringbar, die auf Höhe der Spindelachsen 13, 14 liegt, so daß nach entsprechender Bewegung des den Trommelwerkzeugspeicher 20 tragenden Querschlitten 16 und Bettschlitten 22 die Mittenachse 34 des Greiforgans 29 in Fluchtung sowohl mit der Spindelachse 13 der einen Werkstückspindel 11 als auch der Spindelachse 14 der anderen Werkstückspindel 12 bringbar ist. In diesen Stellungen erfolgt entweder die Abholung oder Zustellung des Werkstücks von bzw. zu einer Werkstückspindel. Dem Greiforgan 29 ist eine auf dem Querschlitten 16 bzw. auf dem Gehäuse 35 für den Antrieb des Trommelwerkzeugspeichers 20 angeordnete Greiforgan-Betätigungsvorrichtung 36 zugeordnet, die mit dem Greiforgan 29 koppelbar ist, sobald sich dieses in Werkstück-Transferposition, d.h. auf Höhe der Spindelachsen 13, 14 der Werkstückspindeln 11, 12 befindet. Entsprechend den Fig. 2 und 3 weist die Greiforgan-Betätigungsvorrichtung 36 ein axial bzw. parallel zur Drehachse 38 des zugeordneten Trommelwerkzeugspeichers 20 hin- und herbewegbares (siehe Doppelpfeil 41 in den Fig. 2 und 3) Koppelelement 40 auf, wobei die Hin- und Herbewegung desselben durch eine hydraulisch betätigte, zweiseitig beaufschlagbare Kolben-Zylinder-Einheit 39 (Fig. 2) erfolgt. Die Hydraulik-Anschlüsse an der Kolben-Zylinder-Einheit 39 sind in Fig. 2 mit den Bezugsziffern 70, 71 gekennzeichnet. Das erwähnte Koppelelement 40 ist in der Werkstück-Transferposition des Greiforgans 29 zur Betätigung desselben, d.h. zum Öffnen oder Schließen der Greifzange bzw. zum Freigeben oder Greifen des Werkstücks, mit einem komplementären Anschlußteil 42 des im Trommelwerkzeugspeicher bzw. in der Revolverscheibe 20 gelagerten Greiforgans 29 koppelbar unter Herstellung einer hydraulischen Verbindung 43 zwischen einem hier nicht dargestellten hydraulischen Steuerorgan und einem hydraulisch betätigbaren Antriebsmittel, nämlich in Form einer einseitig beaufschlagbaren Kolben-Zylinder-Einheit 44 (siehe Fig. 4) für das Greiforgan bzw. die Greifzange 29. Entsprechend Fig. 4 wie oben bereits ausgeführt, ist das Greiforgan 29 nach Art einer Greifzange mit zwei radial über den zugeordneten Trommelwerkzeugspeicher 20 vorstehenden Klemmbacken 45, 46 ausgebildet, die jeweils um sich parallel zur Drehachse 38 des Trommelwerkzeugspeichers 20 erstreckende Achsen 47, 48 verschwenkbar gelagert sind (Doppelpfeile 73, 74 in Fig. 4), wobei sie durch ein elastisches Element in Form einer Druckfeder 49 in Offenstellung gehalten, d.h. auseinanderbewegt sind, gegen deren Wirkung sie mittels der zugeordneten Kolben-Zylinder-Einheit 44 in Schließ- bzw. Werkstückklemmstellung bringbar sind. Die Druckfeder 49 ist bezogen auf die Schwenkachsen 47, 48 der Klemmbacken 45, 46 an der dem Werkstück zugewandten Seite wirksam, während die Kolben-Zylinder-Einheit 44 an der diametral gegenüberliegenden Seite der Klemmbacken 45, 46 angreift. Entsprechend Fig. 4 sind die Klemmbacken 45, 46 werkstückseitig mit Werkstück-Kontaktrollen 76 versehen, so daß das bereits vorbearbeitete Werkstück oberflächenschonend an nur drei Stellen ergriffen und festgehalten wird. Die Kontaktflächen der Kontaktrollen 76 können zur erhöhten Oberflächenschonung des vorbearbeiteten Werkstücks 75 zusätzlich mit einer elastisch nachgiebigen Beschichtung versehen sein.

Entsprechend Fig. 3 umfaßt das Koppelelement 40 eine axial verschiebbar gelagerte zweiteilige Hülse 52, 53 mit einem axialen Fluiddurchgang 54, in dem ein in Richtung zum Trommelwerkzeugspeicher bzw. zur Revolverscheibe 20 axial vorstehendes Ventil- und Fluidverbindungsröhrchen 55 axial verschiebbar gelagert ist, derart, daß es unter Anlage am Anschlußteil 42 des Greiforgans 29 und unter gleichzeitiger Öffnung des Fluiddurchgangs 54 und damit Herstellung der Fluidverbindung zum hydraulischen Steuerorgan entgegen der Wirkung eines elastischen Elements in Form einer im Fluiddurchgang 54 angeordneten Druckfeder 56 in die axial verschiebbar gelagerte Hülse 52, 53 hineinbewegbar ist (entsprechend der Darstellung in Fig. 3). Die axial verschiebliche Lagerung der Hülse 52, 53 erfolgt entsprechend Fig. 2 in zwei axial voneinander beabstandeten Lagerböcken 50, 51, die am Gehäuse 35 für den Antrieb des Trommelwerkzeugspeichers bzw. der Revolverscheibe 20 befestigt sind. Entsprechend Fig. 2 ist die die Axialverschiebung des Koppelelements 40 bewirkende Kolben-Zylinder-Einheit 39 neben dem Koppelelement auf dem Gehäuse 35 befestigt, wobei die Verbindung zwischen dem Koppelelement 40 und der aus der Kolben-Zylinder-Einheit 38 herausragenden Kolbenstange 77 durch eine Verbindungslasche 78 erfolgt.

Der bereits erwähnte Anschlußteil 42 des Greiforgans 29 ist durch dessen Bestigungszapfen 32 gebildet, welcher ebenfalls einen Fluiddurchgang 57 aufweist, dessen dem Kopplungselement 40 zugewandte Öffnung 58 durch eine federbelastete (Druckfeder 60) Ventilkugel 59 abgedichtet ist. Die Ventilkugel 59 ist unter Freigabe der Öffnung 58 durch das dem Kopplungselement 40 zugeordnete Ventil- und Fluidverbindungsröhrchen 55 in den Fluiddurchgang 57 des Befestigungszapfens 32 hineinbewegbar, wodurch gleichzeitig das Ventil- und Fluidverbindungsröhrchen 55 entgegen der Wirkung der dieses beaufschlagenden Druckfeder 56 von seinem Dichtsitz innerhalb des Fluiddurchgangs 54 im Kopplungselement 40 abgehoben wird. Dadurch wird eine gegenüber dem Umgebung abgedichtete Fluidverbindung zwischen den Fluiddurchgängen 54, 57 des Kopplungselements 40 und des Befestigungszapfens 32 und damit zwischen dem nicht dargestellten hydraulischen Steuerorgan und dem Greifwerkzeug 29 hergestellt. Die durch die Ventilkugel 59 verschließbare Öffnung 58 ist innerhalb einer am stirnseitigen Ende befestigten, nämlich angeschraubten Abdeckscheibe 79 ausgebildet, gegen die in Werkstück-Transferposition des Trommelwerkzeugspeichers bzw. der Revolverscheibe 20 das Kopplungselement 40 unter Anpressung einer sich um das Ventil- und Fluidverbindungsröhrchen 55 herum erstreckenden Ringdichtung 80 bewegbar ist. Die Ringdichtung 80 ist als O-Ring ausgebildet und stellt die Abdichtung der Fluidverbindung 54, 57 gegenüber dem Umgebung sicher. In entsprechender Weise ist bei zurückgezogenem Koppelelement 40 durch einen innerhalb des Fluiddurchgangs 54 dem Ventil- und Fluidverbindungsröhrchen 55 zugeordneten O-Ring 81 die Abdichtung der Fluidverbindung 54 gegenüber der Umgebung sichergestellt. Der O-Ring 81 ist entsprechend Fig. 3 zwischen einander zugewandten Schultern der das Kopplungselement 40 definierenden Hülse 52, 53 und des Ventil- und Fluidverbindungsröhrchens 55 angeordnet. Die dem O-Ring 81 zugeordnete Schulter des Ventil- und Fluidverbindungsröhrchens 55 ist in Fig. 3 mit der Bezugsziffer 82 gekennzeichnet. Das Ventil- und Fluidverbindungsröhrchen 55 weist einen zentralen Fluidkanal 83 auf, der über radiale Fluidverbindungen 84, 85 an den distalen Enden des Fluidkanals 83 mit den Fluiddurchgängen 57 bzw. 54 unter Herstellung der hydraulischen Verbindung zwischen dem nicht dargestellten hydraulischen Steuerorgan und dem hydraulisch betätigten Greiforgan 29 entsprechend Fig. 3 fluidverbindbar ist. Zur Ausbildung der dem O-Ring 81 zugeordneten Schulter innerhalb des Fluiddurchgangs 54 ist die das Koppelelement 40 bildende Hülse zweiteilig ausgebildet. Der die erwähnte Schulter umfassende Teil ist mit der Bezugsziffer 52, der übrige Teil mit der Bezugsziffer 53 gekennzeichnet. Die beiden Teile 52, 53 sind jedoch starr miteinander verbunden.

Der Innendurchmesser der Öffnung 58 ist nur geringfügig (Spielpassung) größer als der Außendurchmesser des in diese Öffnung hineinbewegbaren vorderen Endes des Ventil- und Fluidverbindungsröhrchens 55, so daß auch während der Bewegung des vorderen Endes des Ventil- und Fluidverbindungsröhrchens 55 in die Öffnung 58 hinein unter entsprechender Abhebung der Ventilkugel 59 von dieser bis zur Anlage des O-Ringes 81 an der Abdeckscheibe 79 eine ausreichende Fluid-Abdichtung gegenüber der Umgebung gewährleistet ist. Zur präzisen Steuerung des Greiforgans 29 ist es schließlich erforderlich, daß keine Luft in den Fluiddurchgang 54, 57 gelangt. Desweiteren sollen nach Möglichkeit Leckagen vermieden werden.

Um sehr kurze Werkstücke ohne Gefahr einer Beschädigung desselben mittels des Greiforgans 29 erfassen zu können, ist dieses oder dessen Klemmbacken 45, 46 in axialer Richtung elastisch hin- und herverschiebbar gelagert.

Um kurze Futterteile entnehmen zu können ist z.B. am Trommelwerkzeugspeicher 19 ein Spreizdorn als Greiforgan angeordnet, der in eine innere Ausnehmung des Futterteils hineinfahrbar ist. Mittels des Spreizdornes wird das Futterteil dem Spannfutter 23 der Werkstückspindel 11 entnommen. Anschließend erfolgt die Übergabe an das oben beschriebene zangenartige Greiforgan 29, mittels dem das Futterteil an die zweite Werkstückspindel 12 übergeben wird.

Entsprechend Fig. 1 ist am Querschlitten 16 bzw. an dem Gehäuse 35 für den Antrieb des Trommelwerkzeugspeichers 20 eine dem Greiforgan 29 zustellbare Werkstück-Ausschlußvorrichtung 61 befestigt mit einem das Werkstück unter Freigabe durch das Greiforgan 29 axial, d.h. in Spindelachsrichtung (Doppelpfeil 66) der für die rückseitige Bearbeitung zuständigen Werkstückspannstelle, hier Werkstückspannstelle 24, zustellenden Stößel 62. Zu diesem Zweck umfaßt die Werkstück-Ausstoßvorrichtung 61 eine am Querschlitten 16 bzw. am Gehäuse 35 montierte, vorzugsweise zweiseitig beaufschlagbare, hydraulisch oder pneumatisch gesteuerte Kolben-Zylinder-Einheit 63, mittels der eine dem Stößel 62 zugeordnete, vorzugsweise einseitig beaufschlagbar und ebenfalls hydraulisch oder pneumatisch betätigte Kolben-Zylinder-Einheit 64 in etwa radialer Richtung entsprechend dem Doppelpfeil 65 bezogen auf die Drehachse 38 des das Greiforgan 29 tragenden Trommelwerkzeugspeichers 20 dem Greiforgan 29 zustellbar ist, sobald sich dieses in seiner Werkstückabgabestellung befindet. Der Stößel 62 ist bei der dargestellten Ausführungsform aus dem Zylinder herausragender Teil des Kolbens der zugeordneten Kolben-Zylinder-Einheit 64 und gegen die Wirkung einer innerhalb des Zylinders angeordneten Schraubendruckfeder in Werkstückausstoßstellung bewegbar. Vorzugsweise ist das freie, mit dem Werkstück in Kontakt bringbare Ende des Stößels 62 am übrigen Teil desselben axialfedernd gelagert, um Beschädigungen des Werkstücks an deren Ausschub aus dem Greiforgan und Zustellung zu vermeiden.

Die Fluidanschlüsse zu der zwei-seitig beaufschlagbaren Kolben-Zylinder-Einheit 63 sind in Fig. 1 mit den Bezugsziffern 86, 87 gekennzeichnet. Der Fluidanschluß 88 zu der einseitig beaufschlagbaren Kolben-Zylinder-Einheit 64 ist mit der Bezugsziffer 88 versehen.

In Fig. 1 sind die Verschiebebewegungen der Trommelwerkzeugspeicher 19, 20 mit den Doppelpfeilen "X, Z" bzw. "U, W" angedeutet.

Die zuletzt erwähnte Werkstück-Ausstoßvorrichtung 61 ist dann von Bedeutung, wenn von der ersten Werkstückspindel 11 relativ kurze Werkstücke abgeholt werden, so daß das der zweiten Werkstückspindel 12 zugewandte Ende des Werkstücks überhaupt nicht mehr oder nicht weit genug aus dem Greiforgan 29 vorsteht, so daß es ohne axialer Verschiebung in Richtung zur zweiten Werkstückspindel 12 von dem zugeordneten Spannfutter 24 nicht erfaßt werden kann.

Sämtliche in den Unterlagen offenbarten Merkmale werden als erfindungswesentlich beansprucht, soweit sie einzeln oder in Kombination gegenüber dem Stand der Technik neu sind.

Bezugszeichenliste

24 Werkstückspannstelle
25 Werkstück-Transfereinrichtung
26 seitlicher Versatz der Drehmitten
27 Führungsbahn
28 Führungsbahn
29 Greiforgan bzw. Greifzange
30 Werkzeughalter
31 Werkzeughalter
32 Befestigungszapfen
33 Zapfenloch
34 Mittenachse
35 Gehäuse
36 Greiforgan-Betätigungsvorrichtung
37 Dreh- bzw. Schaltachse
38 Dreh- bzw. Schaltachse
39 Kolben-Zylinder-Einheit
40 Koppelelement
41 Doppelpfeil
42 Anschlußteil
43 hydraulische Verbindung
44 Kolben-Zylinder-Einheit
45 Klemmbacke
46 Klemmbacke
47 Achse
48 Achse
49 Druckfeder
50 Lagerbock
51 Lagerbock
52 Hülse
53 Hülse
54 Fluiddurchgang
55 Ventil- und Fluidverbindungsröhrchen
56 Druckfeder
57 Fluiddurchgang
58 Öffnung
59 Ventilkugel
60 Druckfeder
61 Werkstück-Ausstoßvorrichtung
62 Stößel
63 Kolben-Zylinder-Einheit
64 Kolben-Zylinder-Einheit
65 Doppelpfeil
66 Doppelpfeil
67 Maschinenbett
68 Spindelkasten
69 Spindelkasten
70 hydraulischer Anschluß
71 hydraulischer Anschluß
72 hydraulischer Anschluß
73 Doppelpfeil
74 Doppelpfeil
75 Werkstück
76 Kontaktrollen
77 Kolbenstange
78 Verbindungslasche
79 Abdeckscheibe
80 Ringdichtung (O-Ring)
81 Ringdichtung (O-Ring)

10 Drehmaschine
11 Werkstückspindel
12 Werkstückspindel
13 Spindelachse
14 Spindelachse
15 Querschlitten
16 Querschlitten
17 Führungsbahn
18 Führungsbahn
19 Trommelwerkzeugspeicher
20 Trommelwerkzeugspeicher
21 Bettschlitten
22 Bettschlitten
23 Werkstückspannstelle

82 Schulter
83 Fluidkanal
84 Fluidverbindung
85 Fluidverbindung
86 Fluidanschluß
87 Fluidanschluß
88 Fluidanschluß

**Ansprüche**

1. Drehmaschine mit zwei in der X und Z Ebene unverschieblichen Werkstückspindeln (11, 12), deren Spindelachsen (13, 14) parallel zueinander verlaufen und deren Werkstückspannstellen (23, 24) dementsprechend seitlich versetzt angeordnet sind, und mit mindestens zwei auf gegenüberliegenden Seiten der Spindelachsen (13, 14) angeordneten, unabhängig verfahrbaren Querschlitten (15, 16) mit jeweils einem Trommelwerkzeugspeicher (19, 20), wobei jeder Querschlitten (15, 16) auf einem separaten Bettschlitten (21, 22) angeordnet ist und die Bettschlitten (21, 22) auf eigenen, sich parallel zu den Spindelachsen (13, 14) erstreckenden Führungsbahnen (17, 18) hin- und herverschiebbar sind, und wobei mindestens ein Querschlitten (16) so weit quer zu den Spindellängsachsen verfahrbar ist, daß der zugeordnete Trommelwerkzeugspeicher (20) an beiden Werkstückspindeln (11, 12) einsetzbar ist, dadurch gekennzeichnet, daß die Werkstückspindeln (11, 12) bzw. deren Werkstückspannstellen (23, 24) einander zugewandt sind, und daß der an beiden Werkstückspindeln (11, 12) einsetzbare Trommelwerkzeugspeicher (20) eine Werkstück-Transfereinrichtung (25) aufweist.

2. Drehmaschine nach Anspruch 1, dadurch gekennzeichnet, daß auch der andere Querschlitten (15) so weit quer zu den Spindelachsen (13, 14) verfahrbar ist, daß der zugeordnete Trommelwerkzeugspeicher (19) an beiden Werkstückspindeln (11, 12) einsetzbar ist.

3. Drehmaschine nach Anspruch 1 oder 2, dadurch gekennzeichnet, daß die Führungsbahnen (17, 18) der Bettschlitten (21, 22) in einer gemeinsamen, vorzugsweise etwa vertikalen Ebene liegen, und daß die Spindelachsen (13, 14) der Werkstückspindeln (11, 12) gleichen senkrechten Abstand von dieser Ebene haben.

4. Drehmaschine nach einem der Ansprüche 1 bis 3, dadurch gekennzeichnet, daß mindestens eine (12) der beiden Werkstückspindeln oder einer (16) der beiden die Trommelwerkzeugspeicher tragenden Querschlitten in Richtung senkrecht zu der den Führungsbahnen (17, 18) der Bettschlitten (21, 22) gemeinsamen Ebene hin- und herverfahrbar ist.

5. Drehmaschine nach einem oder mehreren der Ansprüche 1 bis 4, dadurch gekennzeichnet, daß die Werkstück-Transfereinrichtung (25) ein mechanisch, hydraulisch, pneumatisch oder elektromechanisch betätigbares Werkstück-Greiforgan, insbesondere nach Art einer Greifzange (29), umfaßt, das ähnlich wie die Werkzeughalter (30, 31) mittels eines Befestigungszapfens (32) in ein Zapfenloch (33) des zugeordneten Trommelwerkzeugspeichers (20) einsteck- und befestigbar ist.

6. Drehmaschine nach einem oder mehreren der Ansprüche 1 bis 5, dadurch gekennzeichnet, daß die Trommelwerkzeugspeicher (19, 20) an beiden Seiten Zapfenlöcher, vorzugsweise jedoch durchgehende Zapfenlöcher (33), zur Befestigung von Werkzeughaltern (30, 31) und/oder eines oder mehrerer Werkstück-Greiforgane (29) aufweisen.

7. Drehmaschine nach einem oder mehreren der Ansprüche 1 bis 6, dadurch gekennzeichnet, daß die Führungsbahnen (17, 18) der Bettschlitten (15, 16) sich jeweils über den gesamten Bereich zwischen den beiden Werkstückspindeln (11, 12) erstrecken, derart, daß jeder der beiden Trommelwerkzeugspeicher (19, 20) jeweils beiden Werkstückspindeln (11, 12) zur Bearbeitung, Abholung oder Zuführung eines Werkstücks (75) zustellbar ist.

8. Drehmaschine, nach einem oder mehreren der Ansprüche 1 bis 7, dadurch gekennzeichnet, daß das Greiforgan (29) der Werkstück-Transfereinrichtung (25) mittels des zugeordneten Trommelwerkzeugspeichers (20) in eine Transferstellung bringbar ist, die auf Höhe der Spindelachse (13, 14) sowohl der einen als auch anderen Werkstückspindel liegt, so daß nach entsprechender Bewegung des dem Trommelwerkzeugspeicher (20) tragenden Quer (16)- und gegebenenfalls Bett (22)-Schlittens die Mittenachse (34) des Greiforgans (29) bzw. die Mittenachse des transportierten Werkstücks (75) in Fluchtung sowohl mit der Spindelachse (13) der einen Werkstückspindel (11) als auch in Fluchtung mit der Spindelachse (14) der anderen Werkstückspindel (12) bringbar ist.

9. Drehmaschine nach Anspruch 8, dadurch gekennzeichnet, daß dem Greiforgan (29) eine auf dem den entsprechenden Trommelwerkzeugspeicher (20) tragenden Querschlitten (16), insbesondere auf dem Gehäuse (35) für den Antrieb des Trommelwerkzeugspeichers (20), angeordnete Greiforgan-Betätigungsvorrichtung (36) zugeordnet ist, die mit dem Greiforgan (29) koppelbar ist, sobald sich dieses in Werkstück-Transferposition, d.h. auf Höhe der Spindelachsen (13, 14) der Werkstückspindeln (11, 12) befindet.

10. Drehmaschine nach Anspruch 9, dadurch gekennzeichnet, daß die Greiforgan-Betätigungsvorrichtung (36) ein axial bzw. parallel zur Dreh- bzw. Schaltachse (38) des zugeordneten Trommelwerkzeugspeichers (20) hin- und herbewegbares (Doppelpfeil 41), insbesondere mittels einer hydraulisch oder pneumatisch ein- oder zweiseitig beaufschlagbaren Kolben-Zylinder-Einheit (39) hin- und herbewegbares Koppelelement (40) aufweist, welches in der Werkstück-Transferposition des Greiforgans (29) zur Betätigung desselben, d.h. zum Öffnen oder Schließen der Greifzange bzw. zum Freigeben oder Erfassen des Werkstücks, mit einem komplementären Anschlußteil (42) des im Trommelwerkzeugspeicher (20) gelagerten Greiforgans (29) koppelbar ist unter Herstellung einer mechanischen, vorzugsweise jedoch hydraulischen oder pneumatischen Verbindung (43) zwischen einem hydraulischen oder pneumatischen Steuerorgan und einem hydraulisch oder pneumatisch betätigbaren Antriebsmittel, insbesondere in Form einer einseitig beaufschlagbaren Kolben-Zylinder-Einheit (44), für das Greiforgan (29).

11. Drehmaschine nach Anspruch 10, dadurch gekennzeichnet,
daß das Greiforgan (29) nach Art einer Greifzange mit zwei radial über dem zugeordneten Trommelwerkzeugspeicher (20) vorstehenden Klemmbacken (45, 46) ausgebildet ist, die jeweils um sich parallel zur Dreh- bzw. Schaltachse (38) des Trommelwerkzeugspeichers (20) erstreckende Achsen (47, 48) verschwenkbar gelagert sind, wobei sie durch ein elastisches Element, insbesondere eine Druckfeder (49) in Offenstellung gehalten bzw. vorgespannt sind, gegen deren Wirkung sie mittels des zugeordneten hydraulisch oder pneumatisch betätigbaren Antriebsmittels (44) in Schließ- bzw. Werkstückklemmstellung bringbar sind.

12. Drehmaschine nach Anspruch 10 oder 11, dadurch gekennzeichnet,
daß das Koppelelement (40) eine axial verschiebbar gelagerte (Lagerböcke 50, 51) Hülse (52, 53) mit einem axialen Fluiddurchgang (54) umfaßt, in dem ein in Richtung zum Trommelwerkzeugspeicher (20) axial vorstehendes Ventil- und Fluidverbindungsröhrchen (55) axial verschiebbar gelagert ist, derart, daß es unter Anlage am Anschlußteil (42) des Greiforgans (29) und gleichzeitiger Öffnung des Fluiddurchgangs (54) und damit Herstellung der Fluidverbindung zum hydraulischen oder pneumatischen Steuerorgan entgegen der Wirkung eines elastischen Elements, insbesondere einer im Fluiddurchgang (54) der axial verschiebbar gelagerten Hülse (52, 53) angeordneten Druckfeder (56), in die axial verschiebbar gelagerte Hülse (52, 53) hineinbewegbar ist (Fig. 3).

13. Drehmaschine nach Anspruch 12, dadurch gekennzeichnet,
daß der Anschlußteil (42) des Greiforgans (29) durch dessen Befestigungszapfen (32) gebildet ist, welcher einen axialen Fluiddurchgang (57) aufweist, dessen dem Koppelelement (40) zugewandte Öffnung (58) durch eine federbelastete (Druckfeder 60) Ventilkugel (59) oder dergleichen abgedichtet ist.

14. Drehmaschine nach Anspruch 13, dadurch gekennzeichnet,
daß die Ventilkugel (59) unter Freigabe der zugeordneten Öffnung (58) durch das dem Koppelelement (40) zugeordnete Ventil- und Fluidverbindungsröhrchen (55) in den Fluiddurchgang (57) des Befestigungszapfens (32) hineinbewegbar ist, wodurch gleichzeitig das Ventil- und Fluidverbindungsröhrchen (55) entgegen der Wirkung der dieses beaufschlagenden Druckfeder (56) von seinem Dichtsitz innerhalb des Fluiddurchgangs (54) im Koppelelement (40) abgehoben wird, so daß eine gegenüber der Umgebung abgedichtete Fluidverbindung zwischen den Fluiddurchgängen (54, 57) des Koppelelements (40) und des Greiforgan-Befestigungszapfens (32) hergestellt ist.

15. Drehmaschine, nach einem oder mehreren der Ansprüche 1 bis 14, dadurch gekennzeichnet,
daß das Greiforgan (29) oder dessen Klemmbacken (45, 46) axial bzw. in Richtung parallel zu den Spindelachsen (13, 14) der Werkstückspindeln (11, 12) verschiebbar gelagert ist bzw. sind, und zwar vorzugsweise gegen die Wirkung eines elastischen Elements, insbesondere Federelements.

16. Drehmaschine, nach einem oder mehreren der Ansprüche 1 bis 15, dadurch gekennzeichnet,
daß am Querschlitten (16), welcher den das Greiforgan (29) haltenden Trommelwerkzeugspeicher (20) trägt, eine dem Greiforgan (29) zustellbare Werkstück-Ausstoßvorrichtung (61) angeordnet ist, welches einen das Werkstück (75) unter Freigabe durch das Greiforgan (29) axial, d.h. in Richtung parallel zu den Spindelachsen der Werkstückspindeln (Doppelpfeil 66), der für die rückseitige Bearbeitung zuständigen Werkstückspannstelle (24) zustellenden Stößel (62) aufweist.

17. Drehmaschine nach Anspruch 16, dadurch gekennzeichnet,
daß die Werkstück-Ausstoßvorrichtung (61) eine am Querschlitten (16) oder am Gehäuse (35) für den Antrieb des Trommelwerkzeugspeichers (20) montierte, vorzugsweise hydraulisch oder pneumatisch zweiseitig beaufschlagbare Kolben-Zylinder-Einheit (63) aufweist, mittels der eine dem Stößel (62) zugeordnete, vorzugsweise einseitig beaufschlagbare und ebenfalls hydraulisch oder pneumatisch betätigte Kolben-Zylinder-Einheit (64) in etwa radialer Richtung (Doppelpfeil 65) bezogen auf die Dreh- bzw. Schaltachse (38) des das Greiforgan (29) tragenden Trommelwerkzeugspeichers (20) dem Greiforgan (29) zustellbar ist, sobald sich dieses in seiner Werkstückabgabestellung befindet.

18. Drehmaschine nach Anspruch 17, dadurch gekennzeichnet,
daß der Stößel (62) als Teil einer aus dem Zylinder der zugeordneten Kolben-Zylinder-Einheit (64) herausragenden Kolbenstange gegen die Wirkung eines elastischen Elements, insbesondere einer im Zylinder der Kolben-Zylinder-Einheit (64) angeordneten Schraubendruckfeder, in Werkstückausstoßstellung bewegbar ist.

19. Drehmaschine nach einem der Ansprüche 16 bis 18, dadurch gekennzeichnet,
daß das freie, mit dem Werkstück (55) in Kontakt bringbare Ende des Stößels (62) gegenüber dem übrigen Teil desselben axial elastisch nachgiebig gelagert ist.

20. Drehmaschine, nach einem oder mehreren der Ansprüche 1 bis 19, dadurch gekennzeichnet, daß als Greiforgan ein Spreizdorn dient, welcher vorzugsweise zusätzlich vorgesehen ist, wobei der Spreizdorn an einem Trommelwerkzeugspeicher (19) und das als Greifzange ausgebildete Greiforgan (29) am anderen Trommelwerkzeugspeicher (20) befestigt ist, derart, daß das Werkstück durch das als Greifzange ausgebildete Greiforgan (29) vom Spreizdorn übernehmbar und der für die rückseitige Bearbeitung zuständigen Werkstückspindel (12) zustellbar ist.

## Claims

1. Turning lathe with two workpiece spindles (11, 12), which are fixed in the X- and Z plane, the spindle axes (13, 14) of which run parallel to each other and the workpiece clamping points (23, 24) of which are correspondingly offset laterally, and with at least two independently travelling cross slides (15, 16) located on opposite sides of the spindle axes (13, 14), each with a drum tool store (19, 20), each cross slide (15, 16) being located on a separate carriage (21, 22) and the carriages (21, 22) being movable to and fro on their own guideways (17, 18) running parallel to the spindle axes (13, 14), and at least one cross slide (16) being movable at right angles to the spindles longitudinal axes to the extent that the assigned drum tool store (20) can be used at both workpiece spindles (11, 12), characterized in that, the workpiece spindles (11, 12) or their tool clamping points (23, 24) are turned towards each other, and that the drum tool store (20), useable at both workpiece spindles (11, 12) has a workpiece transfer device (25).

2. Turning lathe according to Claim 1, characterized in that, the other cross slide (15) can also be moved at right angles to the spindle axes (13, 14) to the extent that the assigned drum tool store (19) can be used on both workpiece spindles (11, 12).

3. Turning lathe according to Claims 1 or 2, characterized in that, the guideways (17, 18) of the carriages (21, 22) lie in a common, preferably roughly vertical plane, and that the spindle axes (13, 14) of the workpiece spindles (11, 12) are at the same vertical distance from this plane.

4. Turning lathe according to one of Claims 1 to 3, characterized in that

at least one (12) of the two workpiece spindles or one (16) of the two cross slides bearing the drum tool stores can be moved to and fro in vertical direction to the plane common to the guideways (17, 18) of the carriages (21, 22).

5. Turning lathe according to one or more of Claims 1 to 4, characterized in that, the workpiece transfer device (25) includes a mechanically, hydraulically, pneumatically or electro-mechanically operable workpiece gripping component, particularly in the style of gripping tongs (29), which in the same way as the tool holder (30, 31) can be inserted and fixed by means of a fixing pivot (32) in a pivot hole (33) of the assigned drum tool store (20).

6. Turning lathe according to one or more of Claims 1 to 5, characterized in that the drum tool stores (19, 20) have pivot holes on both sides, preferably through pivot holes (33), for fixing tool holders (30, 31) and/or one or more workpiece gripping components (29).

7. Turning lathe according to one or more of Claims 1 to 6, characterized in that the guideways (17, 18) of the carriages (15, 16) each extend over the entire area between the two workpiece spindles (11, 12), in such a way that each of the two drum tool stores (19, 20) can respectively be delivered to the two workpiece spindles (11, 12) for machining, collecting or supplying a workpiece (75).

8. Turning lathe according to one or more of Claims 1 to 7, characterized in that the gripping component (29) of the workpiece transfer device (25) can be brought by means of the assigned drum tool store (20) into a transfer position, which is on a level with the spindle axis (13, 14) not only of one but also of the other workpiece spindle, so that after corresponding movement of the cross slide (16) bearing the drum tool store (20) and possibly of carriage (22) the centre axis (34) of the gripping component (29) or the centre axis of the transported workpiece (75) can be brought into alignment not only with the spindle axle (13) of one workpiece spindle (11) but also into alignment with the spindle axis (14) of the other workpiece spindle (12).

9. Turning lathe according to Claim 8, characterized in that the gripping component (29) is assigned a gripping component operating device (36) – located on the cross slide (16) bearing the corresponding drum tool store (20), in particular on the housing (35) for the drive of the drum tool store (20) – which can be coupled with the gripping component (29), as soon as this is in tool transfer position, i.e. on a level with the spindle axes (13, 14) of the workpiece spindles (11, 12).

10. Turning lathe according to Claim 9, characterized in that

the gripping component operating device (36) has a coupling element (40) – which can move to and fro (double arrow 41), in particular can move to and fro by means of a hydraulically or pneumatically one or two-side strikable piston cylinder unit (39), in axial direction or parallel to the turning or work axis (38) of the assigned drum tool store (20) – which can be coupled in the workpiece transfer position of the gripping component (29) for operation of same, i.e. for opening or closing of the gripping tongs or for release or grasping of the workpiece, with a complementary connecting piece (42) of the gripping component (29) carried in the drum tool store (20) making a mechanical, but preferably hydraulic or pneumatic connection (43) between a hydraulic or pneumatic control component and a hydraulically or pneumatically operable driving means, in particular in the form of a one-side strikable piston cylinder unit (44), for the gripping component (29)

11. Turning lathe according to Claim 10, characterized in that the gripping component (29) in the style of gripping tongs is formed with two jaws (45, 46) projecting radially over the assigned drug tool store (20), which are each swivel-mounted round axles (47, 48) running parallel to the turning or work axis (38) of the drum tool store (20), whereby they are held in open position or prestressed by an elastic element, in particular a compression spring (49), against the action of which they can be brought by means of the assigned hydraulically or pneumatically operable driving means (44) into closing or workpiece clamping position.

12. Turning lathe according to Claim 10 or 11, characterized in that the coupling element (40) includes an axially movable sleeve (52, 53) (supports 50, 51) with an axial fluid passage (54), in which a valve and fluid connecting pipe (55) axially projecting in direction of the drum tool store (20) is mounted so as to be axially movable, in such a way that it can be moved into the axially movable sleeve (52, 53) with fitting of the connecting piece (42) of the gripping component (29) and simultaneous opening of the fluid passage (54) and thereby making the fluid connection to the hydraulic or pneumatic control component against the action of an clastic element, in particular a compression spring (56) located in the fluid passage (54) of the axially movable sleeve (52, 53) (Fig. 3).

13. Turning lathe according to Claim 12, characterized in that the connecting piece (42) of the gripping component (29) is formed by its fixing pivot (32), which has an axial fluid passage (57), of which the opening (58) turned towards the coupling element (40) is sealed by a spring-loaded (compression spring 60) valve ball (59) or similar.

14. Turning lathe according to Claim 13, characterized in that

the valve ball (59) with release of the assigned opening (58) can be moved into the fluid passage (57) of the fixing pivot (32) by the valve and fluid connection tube assigned to the coupling element (40), whereby at the same time the valve and fluid connection tube (55) against the action of the compression spring (56) acting on this is removed from its tight seat within the fluid passage (54) in the coupling element (40), so that a fluid connection – sealed off against the surroundings – is made between the fluid passages (54, 57) of the coupling element (40) and of the gripping component fixing pivot (32).

15. Turning lathe according to one or more of Claims 1 to 14, characterized in that the gripping component (29) or its jaws (45, 46) is or are mounted so as to be movable axially or in direction parallel to the spindle axes (13, 14) of the workpiece spindles (11, 12), that is to say preferably against the action of an elastic element, in particular spring element.

16. Turning lathe according to one or more of Claims 1 to 15, characterized in that on the cross slide (16), which bears the drum tool store (20) holding the gripping component (29), a workpiece ejecting device (61) which can be delivered to the gripping component (29) is located, which has a push rod (62) axially delivering the workpiece (75) with release by the gripping component (29), i.e. in direction parallel to the spindle axes of the workpiece spindles (double arrow 66), to the workpiece clamping point (24) responsible for machining on the reverse side.

17. Turning lathe according to Claim 16, characterized in that the workpiece ejecting device (61) has a piston cylinder unit (63) mounted on the cross slide (16) or on the housing (35) for the drive of the drum tool store (20) this preferably being hydraulically or pneumatically acted on on both sides, and by means of which one piston cylinder unit (64) assigned to the push rod (62), preferably acted on on one side and also hydraulically or pneumatically operated can be delivered to the gripping component (29) in roughly radial direction (double arrow 65) in relation to the turning or work axis (38) or the drum tool store (20) bearing the gripping component (29), as soon as this is in its workpiece delivery position.

18. Turning lathe according to Claim 17, characterized in that the push rod (62) can be moved into workpiece eject position as part of a piston rod projecting from the cylinder of the assigned piston cylinder unit (64) against the action of an elastic element, in particular a coil compression spring located in the cylinder of the piston cylinder unit (64).

19. Turning lathe according to one of Claims 16 to 18,
characterized in that
the free end of the push rod (62), which can be brought into contact with the workpiece (55), is mounted axially elastically and flexibly as against the rest of same.

20. Turning lathe according to one or more of Claims 1 to 19,
characterized in that
as gripping component a straddling mandrel serves which is preferably provided in addition, the straddling mandrel being bixed to a drum tool store (19) and the gripping component (29) formed as gripping tonge to the other drum tool store (20), in such a way that the workpiece can be taken from the straddling mandrel by the gripping component (29) formed as gripping tongs and delivered to the workpiece spindle (12) responsible for machining on the reserve side.

## Revendications

1. Tour comportant deux broches porte-pièces (11, 12) immobiles dans le plan X-Z, dont les axes (13, 14) s'étendent parallèlement l'un à l'autre et dont les organes de serrage de pièces (23, 24) sont disposés de façon correspondante avec un décalage latéral, et comprenant au moins deux chariots transversaux (15, 16) disposés sur les côtés opposés des axes (13, 14) des broches et déplaçables indépendamment, comportant chacun un magasin d'outils à tambour, chaque chariot transversal (15, 16) étant disposé sur un banc coulissant séparé (21, 22) et les bancs coulissants (21, 22) pouvant se déplacer dans un sens et dans l'autre sur des glissières de guidage propres (17, 18) qui s'étendent parallèlement aux axes (13, 14) des broches, et un chariot transversal au moins (16) pouvant se déplacer transversalement aux axes longitudinaux des broches suffisamment loin pour que le magasin d'outils à tambour correspondant (20) puisse être utilisé avec les deux broches porte-pièces (11-12), caractérisé en ce que les broches porte-pièces (11-12) et leurs organes de serrage (23, 24) sont tournés l'une (l'un) vers l'autre, et en ce que le magasin d'outils à tambour (20) utilisable avec les deux broches porte-pièces (11, 12) comporte un dispositif de transfert de pièces (25).

2. Tour selon la revendication 1, caractérisé en ce que l'autre chariot transversal (15) peut aussi se déplacer transversalement aux axes (13, 14) des broches suffisamment loin pour que le magasin d'outils à tambour (19) correspondant soit utilisable avec les deux broches porte-pièces.

3. Tour selon l'une des revendications 1 et 2, caractérisé en ce que les glissières de guidage (17, 18) des bancs coulissants (21, 22) sont situées dans un plan commun de préférence à peu près vertical, et que les axes (13, 14) des broches porte-pièces (11, 12) sont à une même distance de ce plan dans la direction perpendiculaire.

4. Tour selon l'une des revendications 1 à 3, caractérisé en ce qu'au moins une (13) des deux broches porte-pièces ou un (16) des deux chariots coulissants portant les magasins d'outils à tambour peut se déplacer dans un sens et dans l'autre dans une direction perpendiculaire au plan commun des glissières de guidage (17, 18) des bancs coulissants (21, 22).

5. Tour selon une ou plusieurs des revendications 1 à 4, caractérisé en ce que le dispositif de transfert de pièces (25) comprend un organe de préhension de pièces pouvant être actionné hydrauliquement, pneumatiquement ou électromécaniquement, notamment à la façon d'une pince (29), qui, de façon analogue aux porte-pièces (30, 31), peut être enfiché et fixé au moyen d'un ergot de fixation (32) dans un trou correspondant (33) du magasin d'outils à tambour associé (20).

6. Tour selon une ou plusieurs des revendications 1 à 5, caractérisé en ce que les magasins d'outils à tambour (19, 20) présentent des trous d'ergots des deux côtés, ou de préférence des trous d'ergots traversants (33), pour la fixation de porte-pièces (30, 31) et/ou d'un ou plusieurs organes de préhension de pièces (29).

7. Tour selon une ou plusieurs des revendications 1 à 6, caractérisé en ce que en ce que les glissières de guidage (17, 18) des bancs coulissants (15, 16) s'étendent chacune sur toute la région comprise entre les deux broches porte-pièces (11, 12), de telle sorte que chacun des deux magasins d'outils à tambour (19, 20) peut être approché des deux broches porte-pièces (11, 12) pour l'usinage, l'enlèvement ou l'amenée d'une pièce (75).

8. Tour selon une ou plusieurs des revendications 1 à 7, caractérisé en ce que l'organe de préhension (29) du dispositif de transfert de pièces (25) peut être amené au moyen du magasin d'outils à tambour associé (20) dans une position de transfert située à la hauteur des axes (13, 14) tant de l'une que de l'autre des broches porte-outils, de sorte qu'après un mouvement correspondant du chariot transversal (16) et le cas échéant du banc coulissant (22) portant le magasin d'outils (20) l'axe central (34) de l'organe de préhension (29), c'est-à-dire l'axe central de la pièce transportée (75), peut être amené en coïncidence tant avec l'axe (13) de l'une des broches porte-pièces (11) qu'avec l'axe (14) de l'autre broche porte-pièces (12).

9. Tour selon la revendication 8, caractérisé en ce qu'à l'organe de préhension (29) est associé un dispositif d'actionnement d'organe de préhension (36) disposé sur le chariot transversal (16) portant le magasin d'outils à tambour correspondant (20), en particulier sur le boîtier (35) pour l'entraînement du magasin d'outils (20), et qui peut être couplé à l'organe de préhension (29) dès que celui-ci se trouve en position de transfert de pièces, c'est-à-dire à la hauteur des axes (13, 14) des broches porte-pièces (11, 12).

10. Tour selon la revendication 9, caractérisé en ce que le dispositif d'actionemement d'organe de préhension (36) comporte un élément de couplage (40) mobile dans un sens et dans l'autre (double flèche 41) axialement, c'est-à-dire parallèlement à l'axe de rotation ou de couplage (38) du magasin d'outils à tambour associé (20), en particulier au moyen d'un ensemble piston-cylindre (39) hydraulique ou pneumatique à simple ou double effet, lequel élément de couplage, dans la position de transfert de pièces de l'organe de préhension (29), pour l'actionnement de celui-ci, c'est-à-dire l'ouverture ou la fermeture de la pince, autrement dit la libération ou la prise de la pièce, peut être couplé avec une partie de raccordement complémentaire (42) de l'organe de préhension (29) monté dans le magasin d'outils à tambour (20), réalisant ainsi une liaison (43) mécanique, ou de préférence hydraulique ou pneumatique, entre un organe de commande hydraulique ou pneumatique et un organe d'entraînement actionné hydrauliquement ou pneumatiquement, en particulier sous forme d'un ensemble piston-cylindre (44) à simple effet, pour l'organe de préhension (29).

11. Tour selon la revendication 10, caractérisé en ce que l'organe de préhension (29) est réalisé sous forme d'une pince comportant deux mâchoires de serrage (45, 46) qui font saillie radialement par rapport au magasin d'outils à tambour (20) et qui sont montées chacune de façon à pivoter autour d'axes (47, 48) s'étendant parallèlement à l'axe de rotation ou de couplage (38) du magasin d'outils (20), en étant maintenues en position d'ouverture par un élément élastique, en particulier un ressort de compression (49), contre l'action duquel elles peuvent être amenées en position de fermeture ou de serrage de pièces au moyen de l'organe d'entraînement associé (44) à action hydraulique ou pneumatique.

12. Tour selon l'une des revendications 10 et 11, caractérisé en ce que l'élément de couplage (40) comprend une douille (52, 53) montée axialement coulissante (paliers 50, 51) comportant un passage de fluide axial (54) dans lequel est monté axialement coulissant un petit tube de soupape et de communication de fluide faisant saillie axialement en direction du magasin d'outils à tambour (20), de telle sorte qu'il peut se déplacer vers l'intérieur dans la douille (52, 53) montés axialement coulissante, en s'appuyant sur la partie de raccordement (42) de l'organe de préhension (29) et en ouvrant en même temps le passage de fluide (54) pour établir la communication de fluide vers l'organe de commande hydraulique ou pneumatique contre l'action d'un élément élastique, en particulier d'un ressort de compression (56) disposé dans le passage de fluide (54) de la douille (52, 53) montée axialement coulissante (figure 3).

13. Tour selon la revendication 12, caractérisé en ce que la partie de raccordement (42) de l'organe de préhension (29) est formée par l'ergot de fixation (32) de celle-ci, lequel présente un passage de fluide axial (57) dont l'ouverture (58) tournée vers l'élément de couplage (40) est obturée de façon étanche par une bille de soupape (59) sollicitée par ressort (ressort de compression 60).

14. Tour selon la revendication 13, caractérisé en ce que la bille de soupape (59) peut être déplacée vers l'intérieur dans le passage de fluide (57) de l'ergot de fixation (32) par le tube de soupape et de communication de fluide (55) associé à l'élément de couplage (40) en libérant l'ouverture associée (58), grâce à quoi simultanément le tube de soupape et de communication de fluide (55) est soulevé de son siège étanche à l'intérieur du passage de fluide (54) contre l'action du ressort de compression (56) qui le sollicite, de telle sorte qu'une communication de fluide étanche vis-à-vis du milieu environnant est réalisée entre les passages de fluide (54, 57) de l'élément de couplage (40) et l'ergot (32) de fixation de l'organe de préhension.

15. Tour selon une ou plusieurs des revendications 1 à 14, caractérisé en ce que l'organe de préhension (29) ou ses mâchoires de serrage (45, 46) est (sont) monté(es) coulissant(es) axialement ou dans une direction parallèle aux axes (13, 14) des broches porte-pièces (11, 12), et ceci de préférence contre l'action d'un élément élastique, en particulier d'un ressort.

16. Tour selon une ou plusieurs des revendications 1 à 15, caractérisé en ce que sur le chariot transversal (16) qui porte le magasin d'outils à tambour (20) tenant l'organe de préhension (29) est disposé un dispositif d'éjection de pièces pouvant être approché de l'organe de préhension (29) et qui comporte un poussoir (62) délivrant la pièce (75) en libérant par l'organe de préhension (29) l'organe de serrage de pièces (24) adapté à l'usinage de la face arrière, axialement, c'est-à-dire dans la direction parallèle aux axes des broches porte-pièces (double flèche 66).

17. Tour selon la revendication 16, caractérisé en ce que le dispositif d'éjection de pièces (61) comporte un ensemble piston-cylindre (63) monté sur le chariot transversal (16) ou le boîtier (35) pour l'entraînement du magasin d'outils à tambour (20), de préférence actionné hydrauliquement ou pneumatiquement à double effet, au moyen duquel un ensemble piston-cylindre (64) associé au poussoir (62), de préférence à simple effet et également actionné hydrauliquement ou pneumatiquement, peut être approché de l'organe de préhension (29) dans une direction à peu près radiale (double flèche 65) par référence à l'axe de rotation ou de couplage (38) du magasin d'outils à tambour (20) portant l'organe de préhension (29), dès que ce dernier se trouve dans sa position de délivrance de pièces.

18. Tour selon la revendication 17, caractérisé en ce que le poussoir (62), en tant qu'élément d'une tige de piston faisant saillie hors du cylindre de l'ensemble piston-cylindre associé (64), peut se déplacer dans la position d'éjection de pièces contre l'action d'un élément élastique, en particulier d'un ressort de compression hélicoïdal disposé dans le cylindre de l'ensemble piston-cylindre (64).

19. Tour selon l'une des revendications 16 à 18, caractérisé en ce que l'extrémité libre du poussoir (62) qui peut être amenée en contact avec la pièce (55) est montée de façon à se déformer élastiquement axialement par rapport à la partie restante de celui-ci.

20. Tour selon une ou plusieurs des revendications 1 à 19, caractérisé en ce qu'un mandrin expansible, prévu de préférence en supplément, sert d'organe de préhension, le mandrin expansible étant fixé sur un magasin d'outils à tambour (19) et l'organe de préhension (29) sous forme de pince sur l'autre magasin d'outils à tambour (20), de telle sorte que la pièce peut être reprise du mandrin expansible par l'organe de préhension (29) en forme de pince et délivrée à la broche porte-pièces (12) adaptée à l'usinage de la face arrière.

10

68  11  23  13  17  27  88  66  61  31  30  19  27  28  62  37  21  25  15  28  26

67  18  22  65  43  71  16  86  87  63  64  20  30  38  34  24  69  14  12

# Fig. 1

Fig. 2

Fig. 3

Fig. 4